# FASCICULE DE BREVET EUROPEEN

(11) **EP 0 854 199 B1**
(45) Date de publication et mention de la délivrance du brevet: **06.02.2002**
(21) Numéro de dépôt: 97403063.7
(22) Date de dépôt: 17.12.1997
(51) Int. Cl.: C22B 7/02, C22B 19/20, C22B 19/30, C25C 1/16, C22B 3/12

(54) **Dépollution de résidus métallurgiques zincifères par traitement électro-hydrométallurgique continu en milieu basique**
Entsorgung zinkhaltiger metallurgischer Reststoffe durch kontinuierliche elektro-nasschemische Aufarbeitung in basischer Umgebung
Decontamination of zinc-containing metallurgical residues by continuous electro-hydrometallurgical treatment in alkaline environment

(30) Priorité: 20.12.1996 FR 9615681
(43) Date de publication de la demande: 22.07.1998
(73) Titulaire: Sogepass, 57360 Amneville (FR)
(72) Inventeur: Charpentier, Pierre-Emmanuel, 74250 - Viuz en Sallaz (FR); Rocchia, Louis, 57050 - Le Ban St Martin (FR); Eusebe, Claude, 59500 - Douai (FR); Vedrine, Henri, 45160 - Olivet (FR); Pereux, Jean-Louis, 89140 - Villethierry (FR); Rizet, Laurent, 74250 - Viuz en Sallaz (FR)
(74) Mandataire: Ventavoli, Roger

(56) Documents cités:
- EP-A- 0 420 525
- WO-A-96/32512
- FR-A- 2 510 141
- FR-A- 2 535 736
- PATENT ABSTRACTS OF JAPAN vol. 011, no. 124 (C-416), 17 avril 1987 & JP 61 261446 A (YOKO YAKUKA KOGYO KK), 19 novembre 1986,
- C. CARAVACA ET AL.: "Considerations about the recycling of EAf dust ..." RESOURCES,CONSERVATION AND RECYCLING, vol. 10, no. 1/2, avril 1994, AMSTERDAM, NL, pages 35-41, XP000460639

## Description

La présente invention concerne le traitement électro-hydrométallurgique en continu par voie sodique, plus généralement par voie basique, de résidus des industries métallurgiques destiné à en éliminer les métaux lourds sous une forme stabilisée non nuisible à l'environnement et éventuellement valorisable économiquement.

L'invention est plus particulièrement concernée par l'application de ce type de traitements humides à basse température (inf. à 200°C environ pour les phases les plus chaudes) aux effluents des usines sidérurgiques contenant du zinc, notamment les poussières d'aciéries électriques, qui contiennent en outre des métaux lourds, comme le plomb, le cadmium ou le chromé sous forme oxydée.

Par souci de simplification de l'exposé, on se référera par la suite uniquement à ces poussières sidérurgiques, mais sans que l'on puisse pour autant y reconnaître une quelconque limitation du champ d'application du traitement de dépollution selon l'invention.

On connaît un traitement continu de ce type (EP-A-0040659 ou FR-B-2510141, par exemple) comprenant une étape de lixiviation des poussières sidérurgiques par une solution aqueuse de soude, dont le lixiviat, après cémentation des métaux lourds contenus sous forme soluble par du zinc introduit en poudre, subit une phase d'électrolyse de récupération du zinc métal par dépôt cathodique. La solution de soude ainsi épurée est recyclée en amont dans le bac de lixiviation, ou, comme le propose FR-A-2 535 736, neutralisée à l'acide chlorhydrique de récupération et remplacée par de la soude fraîche ou récupérée par électrolyse de la saumure de chlorure de sodium résultant de la neutralisation.

Eu égard au traitement par voie acide qui a déjà cours industriellement, un intérêt décisif de ce procédé par voie basique appliqué aux résidus sidérurgiques (c'est-à-dire le plus souvent riches en oxydes de fer) est de ne pas solubiliser le fer et de le rendre par conséquent aisément éliminable du milieu réactionnel par simple séparation solide/liquide à l'issue de l'étape de lixiviation sodique. Pourtant, à la connaissance du Demandeur, ce procédé n'a pas encore à ce jour rencontré de sanction industrielle significative. Une raison majeure à cela, voire la raison unique, semble être la nécessité de maintenir dans la solution alcaline une teneur en sels dissous (que sont surtout les chlorures et les sulfates inévitablement présents dans les poussières à traiter) compatible avec le respect des conditions opératoires de l'électrolyte finale de récupération de zinc. Or, il est clair que le traitement ne peut économiquement se passer d'une réutilisation en tête du procédé de la solution de soude issue de l'électrolyse. Ainsi, la solution sodique, circulant alors en boucle fermée, inévitablement s'enrichit progressivement en impuretés salines que sont ces sels chlorés et sulfatés apportés par le flux entrant des poussières à traiter.

Leur élimination nécessite une opération complémentaire telle qu'une seconde électrolyse dans une cellule à membrane comme le préconise le document FR-A-2 535 736 déjà cité, ou par évaporation de la solution pour les précipiter, mais qui, quelle que soit la solution retenue, obère lourdement l'intérêt économique du procédé, même en tenant compte de la valorisation possible de la poudre de zinc électrolytique recueillie.

Le but de l'invention est de proposer, via une approche du procédé de traitement différente de celle habituellement retenue, une réponse économiquement satisfaisante au problème souligné ci-avant.

A cet effet, l'invention a pour objet un procédé de traitement dépolluant, par voie électro-hydrométallurgique en milieu basique, de résidus métallurgiques contenant du zinc, tels que des poussières d'aciéries électriques, consistant à soumettre ces résidus métallurgiques à une opération préalable de lessivage à l'eau pour en éliminer, par dissolution, les sels de chlorures et de sulfates présents et recueillir des résidus épurés à l'état humide pour les lixivier ensuite à chaud dans une solution basique de manière à mettre en solution les oxydes de zinc, et selon lequel le lixiviat obtenu, après cémentation par le zinc des métaux lourds qui y sont contenus, subit une opération d'électrolyse de récupération du zinc métal par dépôt cathodique, la solution de soude étant ensuite recyclée en tête dudit traitement, procédé caractérisé en ce que l'opération de lixiviation s'effectue sous atmosphère ventilée, en ce que l'on effectue l'opération de lessivage à l'eau des résidus à traiter en présence de carbonate ajouté de manière à précipiter sous forme de carbonate le calcium présent dans les résidus à l'état de sulfates ou de chlorures solubles, et à extraire ce carbonate de calcium avec les résidus humides lessivés, et en ce que ladite opération de lessivage est suivie par une opération de séparation solide/liquide, la fraction solide constituant alors lesdits résidus épurés à l'état humide à lixivier à chaud dans ladite solution basique, et l'on effectue un ajout d'acide de neutralisation aux eaux de lessivage constituant la fraction liquide pour y précipiter et en extraire des hydroxydes métalliques que l'on lixivie ensuite avec les résidus épurés humides.

On aura compris, en prenant connaissance de cette définition de l'invention, que celle-ci consiste pour l'essentiel à pratiquer un prétraitement de dessalinisation des poussières d'aciéries électriques par lavage à l'eau carbonatée dans une ligne opératoire autonome et indépendante de la boucle de traitement proprement-dite. Cette phase opératoire "amont" est également de nature hydrométallurgique, donc à basse température. Elle est aussi chimiquement active, non par voie basique, mais par voie acide (acide ajouté) car les matières à traiter, comme c'est classiquement le cas des poussières d'aciéries électriques, sont basiques de nature. De ce fait, une dissolution des métaux, comme le plomb, dans les eaux de lavage rend nécessaire une neutralisation à l'acide pour les précipiter. Quant à la boucle de traitement principale composée de la succession opératoire suivante :"lixiviation--> cémentation--> électrolyse", celle-ci n'est pas modifiée par rapport à sa configuration connue, à l'exception de la ligne de retour de la solution sodique en phase de lixiviation qui, exempte d'impuretés salines, peut donc être recyclée en tête du traitement sans précaution particulière à cet égard.

L'ajout à l'eau de lavage d'un carbonate, par exemple du carbonate de sodium (Na₂CO₃), permet de précipiter sous forme de carbonates le calcium apporté par la chaux et par les sulfates et chlorures contenus dans la matière à traiter, et d'éviter ainsi de bloquer la mise en solution des sulfates. La solution saline alors faiblement chargée en calcium est ajustée au pH par ajout d'acide pour précipiter les hydroxydes des métaux, le plomb en particulier.

Les hydroxydes métalliques peuvent d'ailleurs avantageusement être introduits ensuite en l'état dans le bac de lixiviation avec les poussières humides déssalinisées sorties auparavant, au terme de la phase de lessivage à l'eau des poussières brutes d'aciérie.

Concernant le prétraitement de dessalinisation des poussières, l'eau salée, après neutralisation à l'acide et extraction subséquente des hydroxydes de métaux insolubles, peut être déversée, là aussi sans précaution particulière pour la préservation de l'environnement, dans un fleuve, ou en mer, si l'on en a la disposition à proximité. Sinon, un recyclage de cette eau peut être effectué en tête de ligne de lavage dessalinisant après l'avoir débarrassée des sels de sulfates et chlorures par précipitation, au moyen d'une opération d'évaporation par exemple.

Celle-ci, qui s'effectue alors sur une solution saline relativement diluée et faiblement chargée en calcium (puisque préalablement précipité en carbonate), peut être réalisée à l'aide d'une technique connue, disponible dans le commerce et particulièrement économique dans de telles conditions: la technique de Compression Mécanique de Vapeur (plus couramment appelée C.M.V.).

Il convient de préciser que le principe d'un lessivage de dessalinisation de poussières zincifères issues d'aciérie électrique, préalablement à un traitement hydrométallurgique destiné à permettre la récupération de zinc métal par électrolyse, est déjà connu. Voir par exemple l'article de C. Caravaca et al. intitulé "*Considerations about the recycling of EAF flue dusts as a source of the recovery of valuable metals by hydrometallurgical processes*" paru dans Resources, Conservations and Recycling;P. 35 à 41, vol 10, Nos ½ d'Avril 1994 (Amsterdam, NL). Mais, jamais jusqu'ici les efforts de R & D n'ont apparemment été poussés assez loin pour parvenir à construire un procédé industriel en ordre de marche, à l'instar de ce que propose la présente invention.

Celle-ci sera bien comprise et d'autres aspects et avantages apparaîtront plus clairement au vu de la description qui suit donnée, à titre purement illustratif, en référence aux planches de dessins annexées sur lesquelles:
- la figure 1 est une vue fonctionnelle schématique du traitement de base connu par l'art antérieur sur lequel s'appuie l'invention;
- la figure 2 est une vue fonctionnelle analogue du traitement complet selon l'invention.

Sur ces deux figures, les mêmes éléments sont désignés par des références identiques.

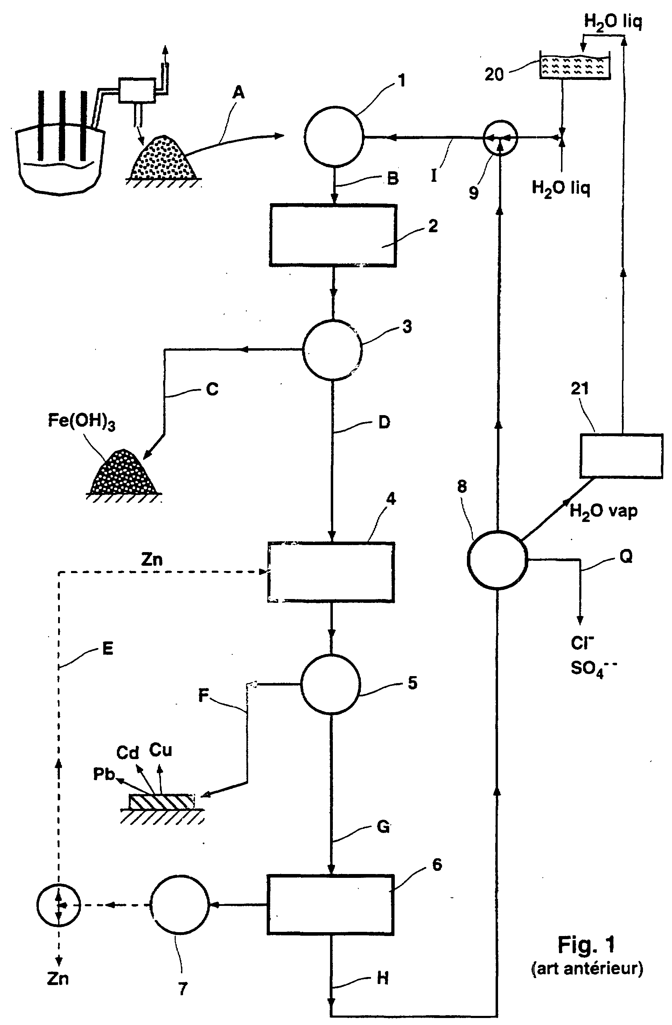

Sur la figure 1 est rappelé le principe général du procédé d'extraction des métaux lourds de résidus métallurgiques par un traitement électro-hydrométallurgique en milieu basique comprenant les trois étapes successives de: lixiviation - cémentation au zinc - électrolyse.

Sous un débit par exemple de 2t/h, les poussières d'acierie électrique A, titrant classiquement plus de 20% en poids de zinc total et au delà de 5% en poids de plomb total, sont introduites dans un mélangeur 1 recevant par ailleurs une solution de soude I à 300g/l par exemple sous un débit de 6 m³/h. Une fois homogénéisée,la suspension B ainsi créée arrive dans le lixiviateur 2 proprement dit, dimensionné pour laisser à la soude le temps réagir avec les oxydes métalliques et former les hydroxydes de Pb, Cd, Zn, etc..., tous solubles en milieu basique. L'hydroxyde de fer, qui se forme également à partir des oxydes ferreux, reste lui sous forme insoluble, comme certains autres oxydes complexes du fer présents dans les poussières qui demeurent en l'état (les ferrites). Par une opération classique de séparation solide/liquide 3, dans un filtre-presse par exemple, la fraction solide C riche en fer est extraite en vue de son retour en usine en tant que matière première, ou est simplement stockée sur parc. La solution alcaline D, ainsi rendue limpide, mais chargée en métaux et sels dissous, parvient alors dans un bac de cémentation 4 dans lequel s'opère, par réaction "red-ox", le déplacement par du zinc des métaux lourds, comme le plomb, etc..., sous forme métal depuis leur formes solubles (plombates, hydroxydes de plomb, etc). Le zinc de cémentation E est introduit dans le bac 4 à l'état pulvérulent et en quantité suffisante pour rendre complètes les réactions "red-ox" de déplacement des métaux. Le cément métallique F est alors extrait par séparation solide/liquide au moyen d'un filtre 5. La sous-verse liquide G obtenue est alors une solution alcaline d'hydroxyde de zinc prête à subir une électrolyse de récupération du zinc à l'état métallique. Celle-ci s'opère dans une cuve électrolytique 6 par dépôt cathodique qui, après séchage et passivation dans une enceinte 7, donne une fine poudre de zinc stabilisée dont une partie peut être avantageusement réutilisée pour la cémentation 4, le reste pouvant être valorisé autrement. Une telle valorisation pourra être trouvée par exemple dans l'industrie du zinc, ou par consommation en sidérurgie dans le processus de fabrication d'acier (bain de galvanisation de tôles, moussage du laitier en acierie, etc...), ou même par une utilisation finale appropriée (adjuvant de peintures, etc...).

La solution de soude H ainsi reconditionnée à la sortie de la cuve d'électrolyse ne peut être recirculée en l'état dans le bac de lixiviation 2 en raison du phénomène d'enrichissement progressif en sels dissous (sulfates et chlorures) qu'elle subirait du fait que ces impuretés salines sont apportées au milieu réactionnel par les poussières sidérurgiques à traiter. Au préalable,elle doit subir une opération visant à l'épurer de ces sels, qui consiste içi en une évaporation dans un évaporateur 8 de manière à précipiter les sels dissous et éliminer hors de l'évaporateur la saumure Q ainsi produite. La solution de soude épurée, mais concentrée I, peut alors être recyclée après dilution par apport d'eau neuve à l'aide de la vanne réglable 9. La vapeur d'eau issue de l'évaporation peut être stockée dans un bac d'appoint 20 après condensation 21. Cette déssalinisation par évaporation présente cependant un coût élevé en raison d'abord des grandes quantités d'énergie qu'elle nécessite. En outre, une fraction de la soude est perdue avec la saumure extraite, de sorte que l'installation ne peut fonctionner durablement sans un apport continu de soude fraiche.

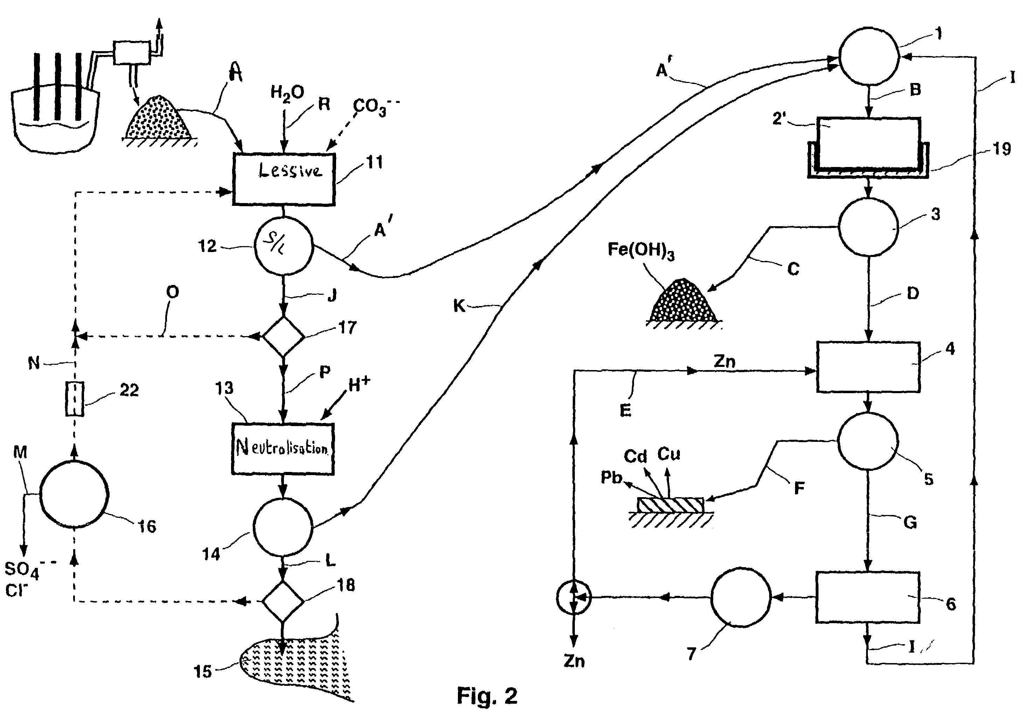

Le procédé selon l'invention, illustré sur la figure 2, permet avant tout de se passer d'une telle étape d'évaporation. Comme déjà indiqué, un élément déterminant de l'invention, sans lequel le caractère continu du traitement global serait empêché, est d'effectuer, grâce notamment à une lixiviation menée à la pression atmosphérique sous atmosphère ventilée au dessus du bac de lixiviation, donc à chaud mais de façon tempérée (température inférieure à celle de l'ébullition), une élimination de l'eau en excès apporté par les résidus à traiter rendus volontairement humides suite à leur lavage préalable qui les débarasse de leurs impuretés salines indésirables que sont les chlorures et les sulfates.

On notera que l'eau salée ainsi produite par ce lavage préalable peut être aisément traitée, car elle se situe hors du traitement basique proprement-dit des résidus et peut donc faire l'objet d'un traitement spécifique, libéré de toute contrainte liée à celui-ci.

Selon l'invention, les résidus à traiter A, des poussières d'acierie électrique dans la variante exemplifiée, sont donc introduits dans un bac de lessivage 11 où ils sont lavés à l'eau afin de dissoudre les sulfates et les chlorures. Préférentiellement, on ajoute avec l'eau un sel carbonaté, en tous cas un apporteur d'ions CO₃⁻⁻, par exemple du carbonate de sodium Na₂CO₃. Cet adjuvent est particulièrement utile si les résidus à traiter contiennent du calcium, ce qui est généralement le cas des poussières sidérurgiques. Le carbonate ajouté à pour fonction de solubiliser les sulfates en précipitant le calcium sous forme de carbonate de calcium CaCO₃ qui s'élimine alors du milieu avec les poussières dessalinisées humides A' par simple séparation solide/liquide. On peut avoir avantage d'effectuer cette séparation solide/liquide sur un filtre laveur 12, tel qu'un filtre à bande, pour essorer au mieux la fraction solide de son liquide intersticiel chargé en sels solubles. Ces poussières humides enrichies au CaCO₃ sont ensuites traitées dans la boucle de traitement décrite en référence à la figure 1, à la différence près qu'elle ne comporte plus de réacteur d'évaporation 8 sur la ligne de retour de la solution de soude, ni de vanne 9 d'apport d'eau subséquent. En outre, afin d'assurer un caractère continu des flux de matières entre le prétraitement de lavage à l'eau et le traitement à la soude, la lixiviation est conduite dans un bac 2' chauffé, par exemple par résistance électrique calorifugée 19, et ventilé afin d'opérer à la pression atmosphérique pour assurer l'élimination sous forme vapeur de l'eau d'humidité des poussières. Par ailleurs, la fraction solide C riche en oxydes de fer issue de la lixiviation sodique se trouve enrichie en du carbonate de calcium possiblement utile à la valorisation de cette fraction solide.

La solution J, riche en sulfates et chlorures, issue du lessivage à l'eau 11 et séparation 12 de la fraction solide, présente la particularité d'être passablement basique (pH d'environ 12) en raison de la présence résiduelle inévitable de chaux. Cette basicité entraine une importante dissolution du plomb sous forme d'hydroxydes lors du lessivage 11. Il est indispensable de l'éliminer sous une forme stable non polluante pour l'environnement. Pour ce faire, la solution alcaline J est introduite dans une cuve 13, où elle subit une neutralisation par ajout d'acide, (tel que de l'acide chlorydrique par exemple) qui ramène son pH autour de 9 environ. Cet abaissement du pH provoque une précipitation de l'hydroxyde de plomb, dont le produit de solubilité se trouve divisé par 1000 par cette simple chute de trois points du pH. Le mélange obtenu est soumis à une séparation solide/liquide 14. Le solide K recueilli contient essentiellement de l'hydroxyde de plomb prêt à être introduit dans le réacteur de lixiviation 2, en même temps que les poussières humides dessalinisées A'.

Quant au filtrat L issu du séparateur 14, il est formé d'eau salée par les chlorures et sulfates dissous. Si, du fait de la nature des résidus sidérurgiques à traiter, ce filtrat est pauvre en sulfates, il n'y a pas d'inconvénient majeur à le rejeter dans le milieu naturel 15, notamment dans un fleuve ou en mer si on est en proximité. On peut également le traiter dans une installation séparée pour en extraire les sels de chlore qu'il contient, si la concentration en sulfates n'est pas trop élevée. Sinon, il faut faire précipiter les sulfates, et les chlorures conséquemment, par une opération d'évaporation menée dans une unité d'évaporation 16 en ligne, permettant d'extraire une saumure M les contenant. L'eau restante, après condensation de la vapeur dans un condenseur 22, est alors quasiment de l'eau pure N, à pH voisin de 7, que l'on peut réutiliser comme eau de lessivage dans le bac 11, l'apport d'eau "neuve" n'étant alors effectué qu'en tant que complément.

La nécessité de procéder à cette évaporation 16, qui s'apparente à l'évaporation 8 du traitement basique selon l'art antérieur, apparaît à première vue susceptible de pénaliser l'intérêt économique de l'invention. En fait, il n'en est rien, car cette évaporation 16 est menée une solution bien moins chargée que l'évaporation 8 du traitement principal connu. D'autre part, comme déjà dit, la solution L contenant uniquement les substances que l'on veut précipiter, le retard à l'ébullition est par conséquent suffisamment faible pour pouvoir utiliser des techniques d'évaporation, telle que la Compression Mécanique de Vapeur (C.M.V.) dans laquelle on réutilise la chaleur latente de vaporisation pour réchauffer un ballon contenant de la solution à évaporer, bien plus économiques que dans le traitement connu. On notera, d'ailleurs, que la C.M.V. ne peut être utilisée dans la ligne de retour de la soude du procédé connu précisément en raison de l'important retard à l'ébullition lorsque la concentration en éléments dissous dépasse un certain seuil.

On notera la présence avantageuse d'une vanne trois voies 18 à la sortie de l'unité de neutralisation-séparation 13,14, permettant de choisir l'évacuation de l'eau salée de lavage ou son retour dans le bac de lessivage 11 après élimination des sels contenus par l'évaporateur 16.

Optionnellement, on peut avantageusement insérer à la sortie du séparateur liquide/solide 12 une autre vanne trois voies 17 de répartition de leau de lessivage J permettant de recirculer une fraction O de cette eau directement dans le bac de lessivage 11, le reste P étant dirigé vers la cuve de neutralisation 13. L'intérêt de cette option est que l'on profite ainsi au maximum des capacités de dissolution des sels de l'eau de lessivage, et que l'on minimise en conséquence la quantité d'eau J à neutraliser puis à éventuellement traiter dans l'évaporateur 16, ce qui contribue à réduire encore le coût de l'opération de prétraitement selon l'invention. A titre indicatif l'expérience montre que l'on peut ainsi recirculer directement dans le bac de lessivage 11 jusqu'à 70% de la solution de lavage J.

En variante, on peut utiliser pour l'opération de neutralisation 13, une solution acide contenant du zinc, par exemple une solution d'électrozingage usagée, afin d'enrichir en zinc les hydroxydes métalliques précipités issus de la neutralisation. Ce zinc pourra être récupéré dans la boucle de traitement sodique des résidus du processus connu. De même, cette neutralisation peut être réalisée à l'aide d'une solution de décapage des aciers, qui trouve ainsi une valorisation possible.

A titre d'exemple, une installation devant traiter 2t/h de poussières d'acierie électrique (contenant de l'ordre de 6 % de sels en poids) doit utiliser pour leur lessivage 6 t/h d'eau. Sur ces 6 t/h, 5,5 t/h proviennent du recyclage de la solution N issue de l'évaporateur 16 duquel s'échappent sous forme de saumure 0,5 t/h d'eau, qui doivent donc être compensées par par une quantité égale d'eau "neuve" d'appoint R introduite dans le bac de lessivage 11.

Si néanmoins, on constatait que les matières B, K, introduites dans le bac de lixiviation 2' présentaient une teneur en sels qui pourraient à la longue perturber le fonctionnement du traitement basique de récupération des métaux I, on peut prévoir la possibilité de réaliser uniquement une évaporation à pression atmosphérique de la solution de soude I issue de la cuve d'électrolyse 6 avant sa réintroduction dans le bac de lixiviation 2. On viserait ainsi à parfaire l'élimination des sels de cette solution I. On peut également ne prévoir qu'une évaporation d'une fraction de cette solution, et de manière épisodique ou continue.

Il va de soi que l'invention ne se limite pas à l'exemple de réalisation décrit ci-avant, mais s'étend à de multiples variantes ou équivalents dans la mesure où est respectée sa définition qu'en donnent les revendications jointes. En particulier, l'élimination de l'eau d'humidité des matières lessivées à traiter peut se faire autrement que dans le bac de lixiviation, par exemple par séchage préalable, ou plus simplement encore, de manière naturelle en étant entrainé avec la fraction solide (ferrites,...) extraite de la ligne de traitement dès la sortie du lixiviateur. L'important à cet égard est de préserver le caractère continu du traitement global, c'est-à-dire du flux des matières passant de la phase de prétraitement (lessivage à l'eau) à la phase de traitement proprement dit.

Comme déjà souligné, l'invention trouve une application privilégiée dans le domaine du traitement des résidus ferreux d'installations sidérurgiques, en particulier des poussières d'acierie électrique, où la teneur pondérale en zinc peut être de l'ordre de 20% et où la teneur en plomb est de l'ordre de 5%. Elle reste cependant applicable de manière générale à tout déchet industriel, ou terre polluée renfermant des métaux lourds sous une forme polluante pour l'environnement.

## Revendications

1. Procédé de traitement dépolluant, par voie électro-hydrométallurgique en milieu basique, de résidus métallurgiques (A) contenant du zinc, tels que des poussières d'aciéries électriques, consistant à soumettre lesdits résidus métallurgiques (A) à une opération préalable de lessivage à l'eau (11) pour en éliminer par dissolution les sels de chlorures et de sulfates présents et recueillir des résidus épurés à l'état humide (A') pour les lixivier ensuite à chaud dans une solution basique (1) de manière à mettre en solution les oxydes de zinc, et selon lequel le lixiviat obtenu (D), après cémentation (4) par le zinc des métaux lourds (F) qui y sont contenus, subit une opération d'électrolyse (6) de récupération du zinc métal par dépôt cathodique, la solution de soude étant ensuite recyclée en tête dudit traitement,
procédé **caractérisé en ce que** l'opération de lixiviation (2') s'effectue sous atmosphère ventilée, **en ce que** l'on effectue l'opération de lessivage à l'eau (11) des résidus à traiter (A) en présence de carbonate ajouté de manière à précipiter sous forme de carbonate le calcium présent dans les résidus à l'état de sulfates ou de chlorures solubles, et à extraire ce carbonate de calcium avec les résidus humides lessivés, et **en ce que** ladite opération de lessivage (11) est suivie par une opération (12) de séparation solide (A') /liquide (P), la fraction solide (A') constituant alors lesdits résidus épurés à l'état humide à lixivier à chaud dans ladite solution basique (1), et l'on effectue un ajout d'acide de neutralisation (13) aux eaux de lessivage constituant la fraction liquide (P) pour y précipiter et en extraire des hydroxydes métalliques (K) que l'on lixivie ensuite avec les résidus épurés humides (A').

2. Procédé selon la revendication 1 **caractérisé on ce qu'**on effectue l'opération de neutralisation à l'acide (13) que sur une fraction (P) seulement de l'eau de lessivage (J), l'autre fraction (0) étant directement réutilisée pour lessiver à nouveau les résidus à traiter (A).

3. Procédé selon la revendication 2, **caractérisé en ce que** l'on réalise la précipitation des sels chlorés et sulfatés (M) dans la solution aqueuse (L) issue de la neutralisation (13), et on les extrait de cette dernière avant de réutiliser l'eau (N) ainsi obtenue pour le lessivage de nouveaux résidus (A) à traiter.

4. Procédé selon la revendication 3, **caractérisé en ce que** l'on réalise ladite précipitation des sels (M) par une opération d'évaporation (16) de la solution accuse (L) effectuée selon la technique connue de Compression Mécanique de Vapeur - C.M.V.

5. Procédé selon la revendication 1, **caractérisé en ce que** la solution basique (1) issue de l'opération d'électrolyse (6) subit de manière épisodique et/ou partielle une évaporation à pression atmosphérique destinée à faire précipiter les sels qui y sont encore contenus sous forme résiduelle.

6. Installation pour la mise en oeuvre du procédé selon la revendication 1,comprenant successivement, et dans l'ordre opératoire chronologique de traitement de la solution basique: un bac de lixiviation (2') suivi par un bac de cémentation (4) puis d'une cuve à électrolyse (6) reliée au bac de lixiviation par une ligne (I) de retour de la solution basique, installation **caractérisée en ce qu'**elle comprend en outre: un bac (11) de lessivage à l'eau des résidus à traiter associé à un séparateur liquide/solide (12) dont la sortie des solides est reliée à l'entrée du bac de lixiviation (2') pour l'alimenter en matières à traiter à l'état humide, des moyens de chauffage étant prévus pour éliminer de l'eau d'humidité des résidus lessivés à traiter, avant ou au sein du bac de lixiviation (2'), et un bac (13) de neutralisation à l'acide des eaux de lessivage issus du bac de lessivage (11) associé à un séparateur liquide/solide (14) dont la sortie des solides est reliée à l'entrée du bac de lixiviation (2'),

7. Installation selon la revendication 6 **caractérisée en ce que** le séparateur liquide/solide (12) associé au bac de lessivage (11) est un filtre laveur.

8. Installation selon la revendication 6 **caractérisée en ce qu'**elle comprend en outre, montés sur la sortie de la fraction liquide du séparateur liquide/solide (14) associé au bac de neutralisation (13), des moyens pour séparer de l'eau de lavage les sels qui y sont contenus.

9. Installation selon la revendication 8, **caractérisée en ce que** lesdits moyens de séparation sont constitué par une unité (16) d'évaporation par Compression Mécanique de Vapeur.

10. Installation selon la revendication 6, **caractérisée en ce que** les moyens pour éliminer l'eau d'humidité des résidus à traiter sont constitués par un équipement de chauffe (19) du bac de lixiviation (2') associé à une ventilation de l'atmosphère au dessus dudit bac.

## Claims

1. Process for the decontaminating treatment, by an electro-hydrometallurgical route in basic medium, of zinc-containing metallurgical residues (A), such as electric steelmaking dust, consisting in subjecting the said metallurgical residues (A) to a prior operation of leaching in water (11) in order to remove the chloride and sulphate salts present therefrom by dissolving them and to recover the purified residues in the wet state (A') in order subsequently to hot-leach them in a basic solution (1) so as to dissolve the zinc oxides, and according to which the leachate obtained (D), after cementation (4) by the zinc of the heavy metals (F) which are contained therein, undergoes an electrolysis operation (6) to recover the zinc metal by cathodic deposition, the sodium hydroxide solution then being recycled to the start of the said treatment,
which process is **characterized in that** the leaching operation (2') is carried out in a ventilated atmosphere, **in that** the operation of leaching in water (11) of the residues to be treated (A) is carried out in the presence of added carbonate so as to precipitate in the form of carbonate the calcium present in the residues in the soluble sulphate or chloride state, and to extract this calcium carbonate with the leached wet residues, and **in that** the said leaching operation (11) is followed by a solid (A')/liquid (P) separation operation (12), the solid fraction (A') then constituting the said purified residues in the wet state to be hot-leached in the said basic solution (1), and a neutralizing acid is added (13) to the leaching waters constituting the liquid fraction (P) in order to precipitate therein and extract therefrom metal hydroxides (K) which are subsequently leached with the wet purified residues (A').

2. Process according to Claim 1, **characterized in that** the preparation of neutralizing with acid (13) is carried out only on a fraction (P) of the leaching water (J), the other fraction (0) being directly reutilized in order to again leach the residues to be treated (A).

3. Process according to Claim 2, **characterized in that** the precipitation of the chloride and sulphate salts (M) is carried out in the aqueous solution (L) coming from the neutralization (13) and the said salts are extracted from the latter before the water (N) thus obtained is reutilized for leaching new residues (A) to be treated.

4. Process according to Claim 3, **characterized in that** the said precipitation of the salts (M) is carried out by an operation of evaporating (16) the aqueous solution (L) performed using the known technique of Mechanical Steam Compression (MSC).

5. Process according to Claim 1, **characterized in that** the basic solution (1) coming from the electrolysis operation (6) undergoes, episodically and/or partially, evaporation at atmospheric pressure intended to precipitate the salts which are still contained in residual form therein.

6. Plant for the implementation of the process according to Claim 1, comprising, in succession and in the chronological operating order for the treatment of the basic solution: a leaching tank (2') followed by a cementation tank (4) and then an electrolysis tank (6) linked to the leaching tank via a line (I) for returning the basic solution, which plant is **characterized in that** it furthermore includes: a tank (11) for leaching in water the residues to be treated, the said tank (11) being associated with a liquid/solid separator (12), the solids outlet of which is linked to the inlet of the leaching tank (2') in order to feed it with materials to be treated in the wet state, heating means being provided in order to remove the moisture water from the leached residues to be treated, before or within the leaching tank (2'), and a tank (13) for neutralizing with acid the leaching waters coming from the leaching tank (11) associated with a liquid/solid separator (14), the solids outlet of which is linked to the inlet of the leaching tank (2').

7. Plant according to Claim 6, **characterized in that** the liquid/solid separator (12) associated with the leaching tank (11) is a filter washer.

8. Plant according to Claim 6, **characterized in that** it furthermore includes, mounted on the liquid-fraction outlet of the liquid/solid separator (14) associated with the neutrilizing tank (13), means for separating from the washing water the salts which are contained therein.

9. Plant according to Claim 8, **characterized in that** the said separating means consist of an evaporation unit (16) operating by mechanical steam compression.

10. Plant according to Claim 6, **characterized in that** the means for removing the moisture water from the residues to be treated consist of a heater (19) for heating the leaching tank (2'), associated with venting of the atmosphere above the said tank.

## Patentansprüche

1. Verfahren zur reinigenden Behandlung von Zink enthaltenden metallurgischen Reststoffen (A) auf dem elektrohydrometallurgischen Weg in basischem Milieu, wie z.B. von Stäuben aus Elektrostahlwerken, das darin besteht, diese metallurgischen Reststoffe (A) zunächst einem Laugevorgang mit Wasser (11) zu unterziehen, um die darin enthaltenen Chlorid- und Sulfatsalze durch Auflösen zu beseitigen und feuchte, gereinigte Reststoffe (A') aufzufangen, die dann in einer basischen Lösung (1) derart heiß gelaugt werden, dass die Zinkoxide gelöst werden, und nach dem die erhaltene Mutterlauge (D), nach der Zementation (4) der darin enthaltenen Schwermetalle (F) durch Zink, einem elektrolytischen Rückgewinnungsverfahren (6) des Metalls Zink durch kathodische Abscheidung unterzogen wird, wobei die Sodalösung daraufhin an den Anfang der Behandlung zurückgeführt wird, wobei dieses Verfahren **dadurch gekennzeichnet ist, dass** der Auslaugevorgang (2') in einer belüfteten Atmosphäre stattfindet, dass der Vorgang des Laugens mit Hilfe von Wasser (11) der zu behandelnden Reststoffe (A) unter Vorhandensein von Carbonat stattfindet, das derart hinzugefügt wird, dass das in den Reststoffen in Form von löslichen Sulfaten oder Chloriden vorhandene Calcium in Form von Carbonat ausgefällt wird und dass dieses Calciumcarbonat mit den ausgelaugten feuchten Reststoffen extrahiert wird, und dass nach diesem Laugevorgang (11) eine Trennung (12) von Fest- (A') und Flüssigstoffen (P) durchgeführt wird, wobei der feste Anteil (A') dann die feuchten gereinigten Reststoffe darstellt, die in der basischen Lösung (1) heiß gelaugt werden sollen, und dem den flüssigen Anteil (P) bildenden Laugenwasser wird eine Neutralisationssäure (13) zum Ausfällen und Extrahieren der Metallhydroxide (K) hinzugefügt, wobei diese Metallhydroxide anschließend mit den gereinigten feuchten Reststoffen (A') gelaugt werden.

2. Verfahren nach Anspruch 1, **dadurch gekennzeichnet, dass** nur ein Teil (P) des Waschwassers (J) mit einer Säure (13) neutralisiert wird, während der andere Teil (O) direkt zum erneuten Waschen der zu behandelnden Reststoffe (A) wiederverwendet wird.

3. Verfahren nach Anspruch 2, **dadurch gekennzeichnet, dass** die chlorierten und sulfatierten Salze (M) in der aus der Neutralisation (13) hervorgegangenen wässrigen Lösung (L) abgeschieden werden und dass sie aus dieser extrahiert werden, bevor das so erhaltene Wasser (N) zum Waschen von neuen zu behandelnden Reststoffen (A) wiederverwendet wird.

4. Verfahren nach Anspruch 3, **dadurch gekennzeichnet, dass** die Abscheidung der Salze (M) durch eine Verdampfung (16) der wässrigen Lösung (L) erfolgt, wobei diese Verdampfung nach dem bekannten Verfahren der Mechanischen Dampfverdichtung (MSF-Verdampfung) durchgeführt wird.

5. Verfahren nach Anspruch 1, **dadurch gekennzeichnet, dass** die aus der Elektrolyse (6) hervorgegangene basische Lösung (1) zeitweise und/oder teilweise einer Verdampfung unter Atmosphärendruck ausgesetzt wird, wodurch die noch als Restbestände darin enthaltenen Salze abgeschieden werden.

6. Anlage zur Durchführung des Verfahrens nach Anspruch 1, welche nacheinander und in der chronologischen Reihenfolge der Behandlung der basischen Lösung folgendes umfasst: ein Laugungsbecken (2'), gefolgt von einem Zementationsbecken (4), dann einen elektrolytischen Behälter (6), der mit dem Laugungsbecken über eine Rückflussstrasse (I) der basischen Lösung verbunden ist, und die **dadurch gekennzeichnet ist, dass** sie zusätzlich folgendes umfasst: einen Waschtrog (11) zum Laugen mit Wasser der zu behandelnden Reststoffe, welcher mit einem Separator von Flüssig- und Feststoffen (12) verbunden ist, dessen Ausgang für die Feststoffe mit dem Eingang in das Laugungsbecken (2') zu dessen Versorgung mit feuchten zu behandelnden Stoffen in Verbindung steht, wobei zur Beseitigung des von der Feuchtigkeit der gewaschenen zu behandelnden Reststoffe stammenden Wassers Heizmittel vor oder innerhalb des Laugungsbeckens (2')vorgesehen sind und eine Wanne (13) zur Neutralisation mittels einer Säure der aus dem Waschtrog (11) hervorgegangenen Waschwasser, welche mit einem Separator Flüssig-/Feststoff (14) verbunden ist, dessen Ausgang für die Feststoffe mit dem Eingang in das Laugungsbecken (2') in Verbindung steht.

7. Anlage nach Anspruch 6, **dadurch gekennzeichnet, dass** der Separator von Flüssig- und Feststoffen (12), der mit dem Waschtrog (11) verbunden ist, ein Waschfilter ist.

8. Anlage nach Anspruch 6, **dadurch gekennzeichnet, dass** sie zusätzlich Mittel zur Trennung vom Waschwasser und der darin enthaltenen Salze aufweist, welche am Ausgang des flüssigen Anteils des Separators Flüssig-/Feststoffe (14) montiert sind, wobei dieser Ausgang mit der Neutralisationswanne (13) in Verbindung steht.

9. Anlage nach Anspruch 8, **dadurch gekennzeichnet, dass** die Trennmittel aus einer Verdampfungseinheit (16) durch Mechanische Dampfverdichtung bestehen.

10. Anlage nach Anspruch 6, **dadurch gekennzeichnet, dass** die Mittel zur Beseitigung des durch die Feuchtigkeit der zu behandelnden Reststoffe entstandenen Wassers aus einer Heizanlage (19) des Laugungsbeckens (2') besteht, die mit einer Belüftung der Atmosphäre oberhalb des Beckens in Verbindung steht.
